# EUROPÄISCHE PATENTSCHRIFT

(11) **EP 2 525 953 B1**
(45) Veröffentlichungstag und Bekanntmachung des Hinweises auf die Patenterteilung: **18.12.2013**
(21) Anmeldenummer: 11702386.1
(22) Anmeldetag: 17.01.2011
(51) Int. Cl.: B29B 17/04, C08J 11/06

(54) **VERFAHREN UND VORRICHTUNG ZUR AUFBEREITUNG UND ENTGIFTUNG**
METHOD AND DEVICE FOR PREPARING AND DETOXIFYING
PROCÉDÉ ET DISPOSITIF POUR LE TRAITEMENT ET LA DÉCONTAMINATION

(30) Priorität: 12.02.2010 AT 2112010; 22.01.2010 AT 882010
(43) Veröffentlichungstag der Anmeldung: 28.11.2012
(73) Patentinhaber: EREMA Engineering Recycling Maschinen und Anlagen Gesellschaft m.b.H., 4052 Ansfelden (AT)
(72) Erfinder: HACKL, Manfred, A-4040 Linz-Urfahr (AT); FEICHTINGER, Klaus, A-4040 Linz (AT); WENDELIN, Gerhard, A-4030 Linz (AT); WEIGERSTORFER, Georg, A-4030 Linz/Ebelsberg (AT); DONALDSON, James, Yarm TS15 95G (GB)
(74) Vertreter: Wildhack & Jellinek
(86) Internationale Anmeldenummer: PCT/AT2011/000028
(87) Internationale Veröffentlichungsnummer: WO 2011/088488

(56) Entgegenhaltungen:
- AT-A4- 506 403
- DE-A1- 2 609 850
- DE-A1-102005 013 701

## Beschreibung

Die Erfindung betrifft ein Verfahren gemäß dem Oberbegriff *der Ansprüche 1 und* 2 sowie eine Vorrichtung zur Durchführung dieses Verfahrens.

Gerade beim Recycling von Kunststoffen ist es ein wichtiges Bedürfnis, dass die aus dem recycelten Material hergestellten Endprodukte qualitativ ansprechend sind und möglichst nahe an solche Produkte heranreichen, die aus Neuware hergestellt werden. Das aufbereitete bzw. recycelte Material bzw. die daraus hergestellten Produkte müssen dabei die notwendigen mechanischen Anforderungen und Normen erfüllen und dürfen insbesondere nicht durch störende Gerüche, Farben oder gar durch auswandernde Giftstoffe etc. beeinträchtigt sein. Insbesondere Kunststoff-Verpackungen, die für den Einsatz bei Lebensmitteln vorgesehen sind bzw. verwendet werden, müssen strengen lebensmittelrechtlichen Vorgaben entsprechen.

Werden solche Materialien aus den Recyclingströmen entnommen, müssen sie deshalb entsprechend gereinigt und aufbereitet werden. Neben diversen Reinigungs- und Waschverfahren, die vornehmlich die Oberfläche säubern, sind häufig noch weitere Reinigungen durchzuführen, insbesondere, da die meisten Polymere keine "dichten" Werkstoffe sind und Migrationen in das Material hinein auftreten können. Diese Migrationen können allerdings mit nur oberflächlich bzw. äußerlich wirkenden Waschverfahren nicht beseitigt werden.

Als Störsubstanzen sind grundsätzlich alle Stoffe anzusehen, die aus dem zu behandelnden Material austreten bzw. sich von dem eingebrachten Material lösen bzw. eventuell sogar gemeinsam mit dem Material eingebracht werden und die eine spätere Beeinträchtigung der Verarbeitung oder der Produktqualität nach sich ziehen können. Die Störstoffe können außen an den Oberflächen des aufzubereitenden Materials anhaften, wie dies insbesondere bei Waschwasser, Oberflächenbeschichtungen etc. der Fall ist und dann dort verdunsten, sublimieren, sich von der Oberfläche lösen od. dgl.. Die Störstoffe können aber auch in der Matrix des Materials bzw. im Inneren des Materials vorliegen und dann im Zuge der Bearbeitung nach außen diffundieren und dort verdunsten, sublimieren od. dgl.. Dies ist insbesondere bei organischen Zusatzstoffen, beispielsweise bei Weichmachern, zu beachten, aber auch Wasser, Monomere, Gase oder Wachse können in der Matrix vorliegen. Es kann sich bei den zu entfernenden Störstoffen somit auch um sublimierende Feststoffe oder um Staub handeln.

Anlagen und Verfahren zum Recycling und zur gleichzeitigen Dekontamination bzw. zur Entfernung von störenden Substanzen sind aus dem Stand der Technik in verschiedenen Ausgestaltungen bekannt.

Eine grundlegende Anlage zur Recyclierung von Polymeren ist beispielsweise in der EP 123 771 beschrieben. In der Regel sind derartige Vorrichtungen allerdings zumeist nicht imstande, alle Störsubstanzen restlos zu entfernen, was eine Beeinträchtigung der Aufbereitung bzw. Verarbeitung zur Folge hat.

Aus der AT 504 854 ist es beispielsweise bekannt, Gase durch die aufzubereitenden Materialien durchzuführen, um diese zu trocknen und gewisse Störsubstanzen zu entfernen. Diese Anlage arbeitet bereits zufriedenstellend.

Es ist jedoch immer vorteilhaft, sowohl die Effizienz als auch die Wirtschaftlichkeit derartiger Verfahren noch weiter zu verbessern.

*In der* DE 102005013701 *wird weiters ein Verfahren beschrieben, bei dem ein gasförmiges Spülmedium durch ein in einem SSP-Reaktor vorgelegtes Material durchgeführt wird und gleichzeitig ein Vakuum angelegt wird.*

*In der* AT 506403 A4 *werden ein Verfahren und eine Vorrichtung zur Dekontamination beschrieben, wobei ein gasförmiges inertes Spülmedium durch das Material durchgeführt wird.*

Aufgabe der vorliegenden Erfindung ist es daher, ein kostengünstiges Verfahren zur Aufbereitung von verunreinigten Materialien zu schaffen, durch das unerwünschte Störstoffe aus dem Material effizient, rasch und möglichst vollständig entfernt werden können.

Diese Aufgabe wird *bei einem flüssigen Spülmedium* durch die kennzeichnenden Merkmale des Anspruchs 1 *und bei einem gasförmigen Spülmedium durch die kennzeichnenden Merkmale des Anspruchs* 2 *gelöst.*

*Gemäß Anspruch 1* ist vorgesehen, dass die in den Aufnahmebehälter eingebrachte Menge des Spülmediums bei einem flüssigen Spülmedium ≤ 0,1 Liter pro Stunde pro Kilogramm Material bzw. Materialdurchsatz pro Stunde ist. Gleichzeitig muss jedoch das Vakuum im Aufnahmebehälter permanent unter 100 mbar gehalten werden.

*Gemäß Anspruch* 2 *ist vorgesehen, dass die in den Aufnahmebehälter eingebrachte Menge des Spülmediums bei einem gasförmigen Spülmedium* ≤ 5 *Nm³, besonders vorteilhaft ≤ 0,1 Nm³, (Normkubikmeter Vₙ) pro Stunde pro kg Material bzw. Materialdurchsatz pro Stunde ist. Gleichzeitig muss das Vakuum im Aufnahmebehälter permanent unter 100 mbar gehalten werden. Zusätzlich* ist *vorgesehen, dass das gasförmige Spülmedium mit einer Geschwindigkeit von zumindest 1 m*/*min in den Aufnahmebehälter eintritt bzw. auf das zu reinigende Material auftrifft. Dadurch wird die Ablösung der Störstoffe gewissermaßen physisch erzwungen* und die *Störstoffe werden vom vorbeiströmenden Spülmedium mitgerissen und in den Spülmediumstrom aufgenommen.*

Die obigen Angaben der zugeführten Menge des Spülmediums pro Stunde beziehen sich auf die Menge des Durchsatzes bzw. der Zufuhr und der Ausbringung des zu reinigenden bzw. gereinigten Materials in den bzw. aus dem Aufnahmebehälter pro Stunde, also Menge Spülmedium/h pro Menge Material/h.

Versuche haben gezeigt, dass auf diese Weise eine rasche und äußerst effiziente Entgiftung der zu recyclierenden Materialien bzw. eine fast vollständige Entfernung der Störstoffe mit wirtschaftlich geringem Aufwand erreicht werden kann.

Alle Angaben in Nm³ (Normkubikmeter Vₙ) verstehen sich als Werte nach DIN 1343, d.h. für trockene Gase bei einer Luftfeuchtigkeit von 0 %, bei T = 273,15 K und p = 1,01325 bar.

Wie bereits eingangs beschrieben, haften die Störstoffe einerseits außen auf den Oberflächen der Polymere an, andererseits sind die Störstoffe auch in Poren, Ritzen oder Spalten der Materialien konzentriert. Diese Störstoffe können zumeist relativ unproblematisch durch sorgfältiges Waschen reduziert werden.

Ein nicht unwesentlicher Anteil an Störstoffen ist in der Regel allerdings auch im Inneren der Matrix des Materials enthalten bzw. darin aufgenommen bzw. gelöst. Gerade diese in der Matrix integrierten Störstoffe sind besonders schwer zu entfernen und reichen oberflächliche Waschverfahren meist nicht aus.

Die Entfernung dieser Störstoffe bzw. Verunreinigungen ist ein komplexer und noch nicht restlos verstandener Vorgang. Deren Entfernung geschieht grundsätzlich in drei Schritten:

Der erste Schritt ist eine Diffusion bzw. Migration der Störstoffe vom Inneren der Materialien hin zum äußeren Randbereich. Dieser Schritt ist stark abhängig von der angelegten Temperatur. Die Temperatur muss jedoch mit Bedacht auf das Material so gewählt werden, dass es, insbesondere bei Polymermaterialien, nicht zu physikalischen oder chemischen Beeinträchtigungen, insbesondere nicht zu einem Schmelzen, kommt. Auch spielt der Umgebungsdruck eine gewisse Rolle, wobei bei geringem Umgebungsdruck ein Diffusionsgefälle erzeugt wird und sich die Migration verstärkt.

Der zweite Schritt ist die Ablösung der Störstoffe von der Oberfläche des Materials. Die Ablösung wird durch ein Spülmedium erleichtert und ist unter anderem abhängig vom Umgebungsdruck bzw. wird durch Anlegen eines Vakuums erleichtert. Ein effektives Ablösen kann erst bei einem Vakuum unter 100 mbar erreicht werden.

In einem dritten Schritt, der Entfrachtung, müssen die Störstoffe dann vom Spülmedium abtransportiert und aus dem Aufnahmebehälter entfernt werden.

Durch die erfindungsgemäße Auswahl einer entsprechend hohen Temperatur, der Vorsehung eines entsprechenden Vakuums sowie dem Einbringen eines Spülmediums kann eine gute Effizienz der Entgiftung erreicht werden. Hierbei müssen allerdings noch weitere Überlegungen, insbesondere zur Wirtschaftlichkeit und zur Dauer des Verfahrens angestellt werden.

Grundsätzlich ist es natürlich eine zulässige Überlegung, man solle möglichst große Mengen an Spülmedium durch das Material durchleiten, um damit vermeintlich große Mengen an Störstoffen abzulösen und abzutransportieren. Solche Verfahren, bei denen, beispielsweise zur Trocknung, große Mengen an Spülgas durch das Material durchgeführt werden, sind auch im Stand der Technik beschrieben. Zumeist wird bei diesen Verfahren jedoch gar kein Vakuum angelegt, sondern werden die Verfahren in offenen Behältern unter Umgebungsdruck geführt. Durch das fehlende Vakuum wird jedoch sowohl die Diffusion als auch die Ablösung der Störstoffe reduziert. Eine große Menge an Spülmedium allein, ist somit nicht hilfreich.

In diesem Zusammenhang ist zu beachten, dass das Einbringen eines Spülmediums - und vor allem einer großen Menge eines Spülmediums - in einen evakuierten Behälter immer zwingend bedingt, dass dadurch das Vakuum stark beeinträchtigt bzw. reduziert wird. Je mehr Spülmedium eingebracht wird, desto höher wird der Druck bzw. desto geringer wird das Vakuum und desto geringer wird die Migration und Verdampfung bzw. Ablösung der Störstoffe. Wenn ein entsprechendes Vakuum aufrechterhalten werden soll, wäre kaum mehr ausreichend Spülmedium einbringbar, ohne dabei das Vakuum zu verringern, wodurch zwar vermehrt Störstoffe auf der Oberfläche vorliegen würden, diese jedoch nicht abgelöst werden würden und damit auch nicht entfernt werden könnten.

Auf der anderen Seite bzw. um dies wieder auszugleichen, kann jedoch auch nicht einfach das Vakuum beliebig erhöht werden, um dadurch eine möglichst große Migration sowie eine hohe Ablösung der Störstoffe zu erreichen. Dazu wäre nämlich eine höhere Saugleistung der Vakuumpumpe erforderlich, was wiederum mit höheren Grund- und Betriebskosten einhergehen würde. Sogar mit den besten Vakuumanlagen kann jedoch bei hohen Mengen an Spülmedien kein ausreichend tiefes Vakuum erzeugt werden.

Es kann also nicht, ohne dabei gleichzeitig auf das Vakuum zu achten, eine große Menge an Spülmedium eingesetzt werden, um damit vermeintlich eine hohe Ablösung und eine große Entfrachtung der Störstoffe zu erreichen. Dies wäre im Gegenteil sogar kontraproduktiv, da, wie beschrieben, dadurch entweder das Vakuum sinken würde, was wiederum bedingen würde, dass, aufgrund der schlechteren Diffusion und geringeren Ablösung, die Entgiftungseffizienz sinkt, oder aber das Verfahren entweder gar nicht mehr oder nicht mehr wirtschaftlich vertretbar geführt werden könnte.

Es sind somit die gegenläufigen Parameter gegeneinander abzuwiegen bzw. in Einklang miteinander zu bringen. Damit kann dann auch die erforderliche Verweilzeit des Materials im Aufnahmebehälter ermittelt werden.

Die Reinigungswirkung wird im Schnitt um 5 bis 65 % gegenüber einer Behandlung ohne Spülmedium gesteigert. Es wurde festgestellt, dass Störstoffe mit höheren Verdampfungspunkten eine größere Steigerung bei der Reinigung erfahren, als Störstoffe, die sich leicht verdampfen lassen oder schon grundsätzlich leicht zu reinigen sind. Die erhaltenen Produkte erfüllen alle erforderlichen Normen, sind z.B. ILSI konform, FDA zertifiziert oder EFSA konform zertifiziert.

Es hat sich in den der Erfindung zugrundeliegenden Versuchen überraschenderweise herausgestellt, dass, entgegen der bisherigen Auffassung, keine großen Mengen an Spülmedium notwendig sind und dass bereits sehr geringe Mengen an Spülmedium ausreichen, um die Effizienz der Entgiftung drastisch zu steigern. Dadurch wird, bei weiter effektiver Ablösung der Störstoffe von der Oberfläche, die Aufrechterhaltung des notwendigen Vakuums wesentlich erleichtert und wirtschaftlicher. Das Verfahren wird dadurch kostengünstiger und die Prozesszeit verkürzt sich bzw. die Verweilzeit im Reaktor kann kürzer werden.

Weitere vorteilhafte Ausgestaltungen des erfindungsgemäßen Verfahrens werden in den abhängigen Ansprüchen beschrieben:

So ist es für eine effiziente Diffusion bzw. Migration der Störstoffe vom Inneren der Materialien zur Oberfläche sowie für eine gute Ablösung vorteilhaft, wenn vorgesehen ist, dass das Vakuum permanent unter 50 mbar, insbesondere zwischen 10 und 20 mbar, vorzugsweise unter 2 mbar, gehalten wird.

Gemäß einer vorteilhaften Ausgestaltung des Verfahrens ist es möglich, dass als Spülmedium ein gasförmiger Stoff, insbesondere Luft, Kohlendioxid, Wasserdampf, ein inertes Gas, wie z.B. Stickstoff, etc., eingesetzt wird. Gasförmige Spülmedien können insbesondere auch für eine zusätzliche Trocknung der Materialien im Aufnahmebehälter eingesetzt werden. Grundsätzlich sind alle inerten Gase besonders tauglich, da sie in der heißen Umgebung im Vorbehandlungsbehälter keine oder nur geringen Einfluss auf das Polymer ausüben.

Alternativ ist es auch vorteilhaft möglich, dass als Spülmedium eine Flüssigkeit eingesetzt wird, die unmittelbar nach dem Eintritt in den Aufnahmebehälter verdampft, insbesondere Wasser. Vor allem Wasser bewirkt eine besonders hohe Effizienz zur Entgiftung und ist auch schon in sehr geringen Mengen wirkungsvoller als Luft. Grundsätzlich sind flüssige Spülmedien leichter zu lagern und zu dosieren. Insbesondere tritt durch deren Verdampfung beim Eintritt in den Aufnahmebehälter eine Änderung des Aggregatzustandes ein, der dazu beiträgt, dass die Ablösung der Störstoffe von den Oberflächen der Polymerteilchen noch besser vonstatten geht. So kommt es zumeist zumindest kurzfristig zu einer Benetzung der Oberfläche der Materialteilchen mit dem flüssigen Spülmedium. Damit kann das flüssige Spülmedium die auf der Oberfläche befindlichen Störstoffe lösen. Bei der kurz danach eintretenden Verdampfung des Spülmediums werden die Störstoffe dann noch effizienter von der Oberfläche abgelöst.

In diesem Zusammenhang ist es vorteilhaft, wenn das Spülmedium polar oder apolar ist. So kann, abhängig vom Charakter bzw. der Polarität der Störstoffe, eine möglichst effiziente Löslichkeit bzw. Mischung der Störstoffe im Spülmedium erreicht werden.

Gemäß einer vorteilhaften Verfahrensführung kann vorgesehen sein" dass das Spülmedium vor dem Eintritt in den Aufnahmebehälter z.B. über eine vorgeschaltete Heizeinrichtung oder eine Gastrocknungseinrichtung erwärmt und/oder getrocknet wird. Die Vorwärmung erfolgt in energiesparender Weise vorteilhaft aus der Abwärme des Gesamtprozesses.

Bei flüssigen Medien wird die Verdampfungsenergie vorteilhafterweise aus dem System bezogen. Zu diesem Zwecke kann die unterste Scheibe, die üblicherweise als gekühlte Scheibe ausgeführt ist, mit kleinen Düsen ausgestattet werden und die Verdampfungsenergie zum Kühlen der Scheibe benutzt werden.

Der Typ der einzubringenden Spülmedien richtet sich nach Art und Menge der zu erwartenden Störstoffe, nach den Eigenschaften des zu reinigenden Materials und nach der Aufgabenstellung:

Handelt es sich z.B. um die Aufgabenstellung, Milchflaschen aus High Density Polyethylen (HD-PE) von Migrationsprodukten zu reinigen, dann ist neben der richtigen Prozesstemperatur und der Einstellung des notwendigen Vakuums, das Einbringen von Wasser oder Luft für die verstärkte Reinigung vorteilhaft. Wasser wird in kleinen Mengen eingedüst und verwandelt sich unter den Prozessbedingungen in Dampf bzw. Gas. Der Einsatz von Wasser ist im Falle von HD-PE oder anderen Polyolefinen relativ unkritisch, da diese Polymere unter den gegebenen Prozessbedingungen, insbesondere der erhöhten Temperatur, relativ unempfindlich auf Wasser reagieren.

Ist Aufgabenstellung allerdings die Reinigung von Polyethylenterephthalat (PET)-Flakes von Migrationsprodukten und sollen die Materialeigenschaften von PET beibehalten werden bzw. sogar verbessert werden, dann ist Wasser ein denkbar ungünstiges Medium, da Wasser bzw. Wasserdampf gerade bei erhöhten Temperaturen zu einem Molekülkettenabbau von PET führen kann. Auch Luft bzw. Sauerstoff kann z.B. zu einer oxidativen Verfärbung führen, die unerwünscht ist. Aus diesem Grund wird man in diesem Fall ein inertes Gas oder eine Flüssigkeit vorziehen, die keinen Einfluss auf das Polymer nimmt. Weiters wird bei der unter Umständen stattfindenden Polykondensation Ethylenglykol bzw. Di-Ethylenglykol erzeugt. Auch diese Produkte werden entsprechend leichter abgeführt. Voraussetzung ist allerdings, dass das einzubringende Spülmedium frei von Feuchte ist, z.B. trockener Stickstoff.

Es gibt allerdings auch Aufgabenstellungen, bei denen eine gezielte Beeinflussung der Viskosität bei PET und gleichzeitig eine Abführung der Migrationsprodukte erwünscht ist, z.B. bei der Rückführung von Recyclinggut in einen Polymerisationsprozess. In diesem Fall ist ein Abbau der Molekülketten gerade erwünscht und erweist sich beispielsweise Wasser als günstiges Spülmedium, da es neben dem beschleunigten Abtransport der Migrationsstoffe auch noch für einem Abbau der Molekülketten sorgt.

Die Hauptaufgabe des Spülmediums ist jedoch die Ablösung der Migrationsprodukte von der Oberfläche der Polymerteilchen sowie der anschließende Abtransport der Migrationsprodukte.

Gemäß einer weiteren vorteilhaften Verfahrensführung ist vorgesehen, dass das Spülmedium mit einer Geschwindigkeit von zumindest 1 m/min in den Aufnahmebehälter eintritt bzw. auf das zu reinigende Material auftrifft. Es hat sich gezeigt, dass vor allem der zweite Schritt, nämlich die Ablösung der Störstoffe von der Oberfläche der Materialien, auch von der Geschwindigkeit des vorbeiströmenden Mediums abhängig ist bzw. von der Geschwindigkeit, mit der das Spülmedium auf die Oberfläche auftrifft. Dadurch wird die Ablösung der Störstoffe gewissermaßen physisch erzwungen und die Störstoffe werden vom vorbeiströmenden Spülmedium mitgerissen. Dieser Effekt tritt bei einer Grenzgeschwindigkeit des Spülmediums von zumindest einem Meter pro Minute auf, in machen Fällen bereits bei etwa 0,8 oder 0,9 m/min. Trifft also das Spülmedium mit einer solchen oder höheren bzw. Anströmgeschwindigkeit auf ein zu reinigendes Polymerteilchen, so werden große Mengen der temperaturbedingt bereits zur Oberfläche des Flakes gewanderten Störstoffe mitgerissen und in den Spülmediumstrom aufgenommen.

Gemäß einer weiteren vorteilhaften Verfahrensführung ist vorgesehen, dass die in den Aufnahmebehälter eintretende Menge des Spülmediums bei einem gasförmigen Spülmedium im Bereich von 0,1 bis 4,7 Nm³ (Normkubikmeter Vₙ), vorzugsweise von 1 bis 3 Nm³, pro Stunde pro Kilogramm Materialdurchsatz pro Stunde und bei einem flüssigen Spülmedium vor der Verdampfung im Bereich von 0,0001 bis 0,08 Liter, vorzugsweise zwischen 0,003 bis 0,05 Liter, pro Stunde pro Kilogramm Materialdurchsatz pro Stunde liegt. In der Regel bewegt sich der Unterdruck dabei in einem Bereich von 2 bis 20 oder 50 mbar. In diesen Bereichen lässt sich das Verfahren effizient, wirtschaftlich und rasch führen.

Gemäß einer weiteren besonders vorteilhaften Verfahrensführung ist vorgesehen, dass die in den Aufnahmebehälter eintretende Menge des Spülmediums bei einem gasförmigen Spülmedium ≤ 0,050 Nm³, vorzugsweise im Bereich von 0,001 bis 0,047 Nm³ (Normkubikmeter Vₙ), vorzugsweise von 0,001 bis 0,030 Nm³, pro Stunde pro Kilogramm Materialdurchsatz pro Stunde und bei einem flüssigen Spülmedium vor der Verdampfung im Bereich von 0,0001 bis 0,08 Liter, vorzugsweise zwischen 0,003 bis 0,05 Liter, pro Stunde pro Kilogramm Materialdurchsatz pro Stunde, liegt. In der Regel bewegt sich der Unterdruck dabei in einem Bereich von 2 bis 20 oder 50 mbar. In diesen Bereichen lässt sich das Verfahren besonders effizient, wirtschaftlich und rasch führen.

Das erfindungsgemäße Verfahren läuft vorteilhafterweise kontinuierlich ab, wobei das zu entgiftende Material kontinuierlich in den Aufnahmebehälter eingebracht und nach einer gewissen Verweilzeit wieder ausgebracht wird, beispielsweise in eine Förderschnecke, einen Extruder oder einen weiteren Behandlungsbehälter, und auch das Spülmedium kontinuierlich einströmt bzw. wieder abgeführt wird.

Besonders effizient ist es, wenn das Spülmedium durch die Bodenfläche des, insbesondere zylindrischen, Aufnahmebehälters eingebracht wird.

Dadurch, dass die Flakes im Aufnahmebehälter in einer rotierenden Mischthrombe herumwirbeln, streichen die Materialien häufig an der Zugabeöffnung des Spülmediums vorbei. Es ist dabei vorteilhaft, wenn die Zugabeöffnung relativ klein ist. So werden die Materialien an dieser Stelle lokal vom Spülmedium getroffen und die Störstoffe abgelöst und in den Gasstrom aufgenommen. Danach bewegt sich das Teilchen weiter und das nächste Teilchen gerät in den Einflussbereich des Spülmediumsstroms. Auf diese Weise bewegt sich in einer gewissen Zeit eine große Menge an Teilchen an derjenigen Stelle bzw. demjenigen pointierten Zugabebereich vorbei, bei dem die Geschwindigkeit bzw. örtliche Strömung des Spülmediums mehr als 1 m/min beträgt. Ob sich in anderen, von der Zugabedüse weiter entfernt gelegenen Behälterbereichen die Geschwindigkeit reduziert, ist dann sekundär, da die Ablösung ohnehin bereits erfolgt ist.

Eine bevorzugte Variante, insbesondere um die erforderliche Mindestgeschwindigkeit des Spülmediums sicher zu erreichen, ist dadurch gekennzeichnet, dass das Spülmedium über zumindest eine, gegebenenfalls eine einzige, Düse, beispielsweise eine Nadeldüse, vorzugsweise mit einem Durchmesser von 1 bis 3 mm eingebracht wird. Die offene Fläche der Düse ist vorteilhafterweise geringer als oder gleich 70 mm².

Oftmals werden vor den Zugabeöffnungen Abweiserbleche angeordnet, um ein Verstopfen zu verhindern. Dies ist im vorliegenden Fall weder nötig, noch vorteilhaft, da dies eine direkte unmittelbare Beaufschlagung der Teilchen mit dem Spülmedium beeinträchtigen würde. Die Eintrittsöffnungen des Spülmediums in den Aufnahmebehälter sollten also möglichst unbedeckt und frei von Abdeckungen sein, die des Spülstrom ablenken oder dessen Geschwindigkeit verringern.

Vor allem bei der Behandlung von Polymermaterialien ist es vorteilhaft, wenn die Flakes stückig und fließfähig bleiben, da nur dadurch eine hohe Gesamtoberfläche des Materials gewährleistet ist. Aus diesem Grund ist es vorteilhaft, wenn vorgesehen ist, dass bei der Aufbereitung eines Polymermaterials, die Behandlung bei einer Temperatur oberhalb der Glasübergangstemperatur und unterhalb des Schmelzbereiches erfolgt, vorzugsweise bei einer Temperatur bei der das Material in einem erweichten Zustand vorliegt, vorzugsweise im Bereich des VICAT-Erweichungspunktes (gemäß DIN 306, A, 10N, 50 K/h). Die auf diese Art erweichten und klebrigen Flakes werden durch die ständige Bewegung und Durchmischung stückig und frei fließfähig gehalten bzw. wird ein Zusammenbacken zu einem kompakten Kuchen mit geringer Oberfläche verhindert.

Gemäß einer vorteilhaften Verfahrensführung ist es möglich, dass dem Aufnahmebehälter zumindest ein weiterer Aufnahmebehälter bzw. Vorbehandlungsbehälter vor- oder nachgeschaltet wird und das Material alle Aufnahmebehälter nacheinander durchläuft. Das erfindungsgemäße Verfahren wird vorzugsweise in jedem einzelnen der Aufnahmebehälter durchgeführt, wobei die Verfahrensführung auch variiert werden kann. Durch entsprechende Auswahl der Parameter, angepasst an das Material und die zu erwartenden Störstoffe, kann zur Erreichung einer noch besseren Effizienz der Entgiftung vorgesehen sein, dass in den Behältern unterschiedliche Arten und/oder unterschiedliche Mengen an Spülmedien eingesetzt werden. So ist es, beispielsweise für eine vollständige Entfernung von mehreren Störstoffen gleichzeitig, vorteilhaft, wenn in den Aufnahmebehältern unterschiedlich polare Spülmedien verwendet werden, z.B. im Vorbehandlungsbehälter ein polares Spülmedium und im Hauptbehandlungsbehälter ein apolares Spülmedium, oder umgekehrt. Eine vorteilhafte Vorrichtung dafür ist beispielsweise in der WO 03/103915 beschrieben.

In diesem Zusammenhang ist es besonders vorteilhaft, wenn ein Vorbehandlungsbehälter und ein daran anschließender Hauptbehandlungsbehälter vorgesehen ist, wobei das Verfahren gemäß einem der vorangehenden Ansprüche in jedem der beiden Behälter durchgeführt wird. Wenn die Temperatur im Hauptbehandlungsbehälter größer ist als im Vorbehandlungsbehälter und/oder der Druck im Hauptbehandlungsbehälter geringer ist als im Vorbehandlungsbehälter wird eine besonders effektive Entgiftung erreicht.

Weiters ist erfindungsgemäß vorgesehen bzw. wird die Aufgabe durch eine besondere Vorrichtung gelöst, bei der vorgesehen ist, dass das Gaszufuhrmittel so ausgestaltet ist, dass das Spülmedium mit einer Geschwindigkeit von zumindest 1 m/min in den Aufnahmebehälter einführbar ist und dass der Aufnahmebehälter und die Vakuumpumpe so ausgebildet bzw. konstruktiv so ausgestaltet sind, dass im Aufnahmebehälter ein Vakuum permanent unter 100 mbar aufrechterhaltbar ist. Mit einer solchen Vorrichtung kann das erfindungsgemäße Verfahren schnell und einfach durchgeführt werden.

Die erfindungsgemäße Vorrichtung basiert im Wesentlichen auf einer handelsüblichen Vorrichtung, wie diese beispielsweise unter den Namen Vacurema® Basic, Advanced oder Prime von der Firma Erema erhältlich ist. Es kann beispielsweise eine Vorrichtung eingesetzt werden, wie sie in der EP 2 117 796 beschrieben ist.

Beim erfindungsgemäßen Verfahren wird das Spülmedium, das imstande ist, die Störstoffe abzulösen, aufzunehmen bzw. mitzureißen, von unten, d.h. in einem Bereich unterhalb des Niveaus des im Betrieb im Schneidverdichter befindlichen Materials bzw. unterhalb des Materiallevels der sich ausbildenden Mischthrombe ins Innere des Schneidverdichters eingebracht. Das mit Störstoffen angereicherte, gegebenenfalls gesättigte, und dann gasförmige Spülmedium wird in einem Bereich oberhalb des Niveaus des im Betrieb im Schneidverdichter befindlichen Materials bzw. oberhalb des Materiallevels der Mischthrombe aus dem Schneidverdichter ausgebracht. Es wird dabei eine Zwangsströmung ausgebildet und das Spülmedium durchströmt zumindest einen Teilbereich des Materials.

Die Zufuhrmittel für das Spülmedium können als passive Zufuhrmittel, beispielsweise als bloße Durchgangsöffnungen, ausgebildet sein, durch die das Gas lediglich passiv, beispielsweise durch Unterdruck im Schneidverdichter ins Innere des Schneidverdichters eingesaugt wird. Die Zufuhrmittel können aber auch als aktive Zufuhrmittel, beispielsweise als Düsen od. dgl. ausgebildet sein, durch die das Gas beispielsweise mit Pumpen, Gebläsen etc. mit Überdruck aktiv ins Innere des Aufnahmebehälters eingeblasen, eingedüst oder eingepumpt werden kann.

Die Zufuhrmittel können einerseits, insbesondere in Form einer oder mehrerer Düsen, in der Bodenfläche des Schneidverdichters unterhalb des untersten Bodenmischwerkzeuges ausgebildet sein und dort vorzugsweise innerhalb des innersten Radiusdrittels der Bodenfläche. Wenn die Zufuhrmittel in der Bodenfläche ausgebildet sind, kommt es durch die Einblasung des Spülmediums von unten auch zu einer gewissen Auflockerung des Sumpfes, wodurch eine noch bessere Aufbereitung und Entgiftung des Materials gewährleistet wird.

Die Zufuhrmittel können dabei als einzelne singuläre Öffnungen oder in Form einer um die Durchführung der Antriebswelle des Mischwerkzeuges durch die Bodenfläche herum nahezu durchgehend verlaufenden ringschlitzartigen Öffnung ausgebildet sein.

Alternativ oder zusätzlich zu den Öffnungen in der Bodenfläche können die Zufuhrmittel auch in der Seitenwand des Schneidverdichters angeordnet sein, wobei darauf zu achten ist, dass die Zufuhrmittel ständig unterhalb des Materialniveaus liegen. Vorteilhaft sind Positionen der Zufuhrmittel im Bereich des untersten Drittels der Gesamthöhe des Schneidverdichters, insbesondere unterhalb der unteren bzw. untersten bodennahen Mischwerkzeuge.

Bei Vorrichtungen mit mehreren übereinander angeordneten Mischwerkzeugen ist es vorteilhaft für die Verfahrensführung, wenn die Zufuhrmittel zwischen den obersten und den untersten Mischwerkzeugen angeordnet sind bzw. in den jeweils zwischen zwei Scheiben bzw. Mischwerkzeugen ausgebildeten Raum einmünden. Auf diese Weise wird das Material gut vom Spülmedium durchströmt und die Strömung wirkt mit der Durchmischung durch die Mischwerkzeuge in vorteilhafterweise zusammen.

Vorteilhafterweise münden die Zufuhrmittel nicht im Bereich der Kanten der Trägerscheiben bzw. der Mischwerkzeuge, sondern, insbesondere jeweils, in den Bereich zwischen jeweils zwei Trägerscheiben bzw. Mischwerkzeugen in den Aufnahmebehälter ein bzw. sind dort angeordnet, wobei die Zufuhrmittel insbesondere mittig zwischen jeweils zwei Trägerscheiben bzw. Mischwerkzeugen angeordnet sind.

In diesem Zusammenhang ist es besonders vorteilhaft, wenn zumindest in der oberen Trägerscheibe Durchbrüche ausgebildet sind, da auf diese Weise die Störsubstanzen effektiv aus dem Bereich zwischen den Mischwerkzeugen entfernt werden können.

Wenn die Zufuhrmittel in demjenigen Bereich der Seitenwand des Behälters ausgebildet sind, in dem die rotierenden Materialteilchen den höchsten Druck auf die Seitenwand ausüben, so müssen die Zufuhrmittel diesem Druck entgegenwirken und als aktive Zufuhrmittel das Spülmedium mit Druck ins Innere des Behälters einbringen.

Auch in der Seitenwand können die Gaszufuhrmittel als einzelne singuläre Öffnungen ausgebildet sein. Sie können aber auch in Form eines sich entlang des Umfanges erstreckenden Ringspaltes ausgebildet sein.

Alternativ oder zusätzlich zu den bisher beschriebenen Anordnungsmöglichkeiten können die Zufuhrmittel auch auf zumindest einem der Mischwerkzeuge bzw. auf der Trägerscheibe angeordnet sein. Dabei ist eine Anordnung auf dem unteren, der Bodenfläche nächsten Mischwerkzeug bzw. auf der unteren Trägerscheibe vorteilhaft. Bei der Anordnung der Zufuhrmittel auf den Mischwerkzeugen bzw. Trägerscheiben ist es vorteilhaft, die Zufuhrmittel auf der der Bodenfläche zugewendeten Seite auszubilden.

Außerdem ist es vorteilhaft, die Zufuhrmittel nahe der Achse der Trägerscheibe bzw. der Mischwerkzeuge anzuordnen und vorteilhafterweise nahe den beim Umlauf der Trägerscheibe nachlaufenden Rändern der Werkzeuge bzw. nahe dem Durchbruch. Auf diese Weise kann eine effektive Entfernung der Störstoffe gewährleistet werden.

Eine Durchströmung des Materials durch Spülmedien im Querstromprinzip, d.h. von Seitenwand zur Seitenwand, ist ebenfalls möglich, allerdings etwas aufwendiger. Vorteilhaft ist dies jedoch dann, wenn eine mögliche Rekondensation verhindert werden soll. Grundsätzlich ist auch eine Zuführung der Spülmedien von oben möglich.

Zur Regulierung der Zufuhr bzw. -abfuhr sind die Zufuhrmittel vorteilhafterweise zumindest teilweise verschließbar bzw. ansteuerbar. Ein Stellglied bzw. Ventil regelt dabei vorteilhafterweise die Menge der Spülmedien. Das Stellglied kann über die Messung des Vakuums geregelt werden. Das ist insofern vorteilhaft, da das Vakuum weiter aufrecht erhalten werden soll, um ein ausreichendes Diffusionsgefälle zu ermöglichen.

Es hat sich nun in Versuchen gezeigt, dass bei der erfindungsgemäßen Einbringung von Spülmedien in einen vakuumdichten Aufnahmebehälter die Reinigungswirkung erhöht werden kann bzw. die Prozesszeit verkürzt werden kann. Dabei ist es wesentlich, dass die Medien auch tatsächlich durch das Material hindurch strömen müssen und gleichzeitig das Vakuum noch weitgehend erhalten bleibt.

Die Erfindung wird nun anhand von besonders vorteilhaften, nicht einschränkend zu verstehenden, Ausführungsbeispielen, exemplarisch beschrieben.

Besonders bevorzugte Vorrichtungen, in denen auch die folgenden Verfahrensbeispiele geführt wurden, sind in den Zeichnungen dargestellt:
Fig. 1 zeigt eine einstufige Vorrichtung
Fig. 2 zeigt eine zweistufige Vorrichtung mit einem Vorbehandlungsbehälter
Fig. 3 zeigt eine zweistufige Vorrichtung mit zwei Vorbehandlungsbehältern

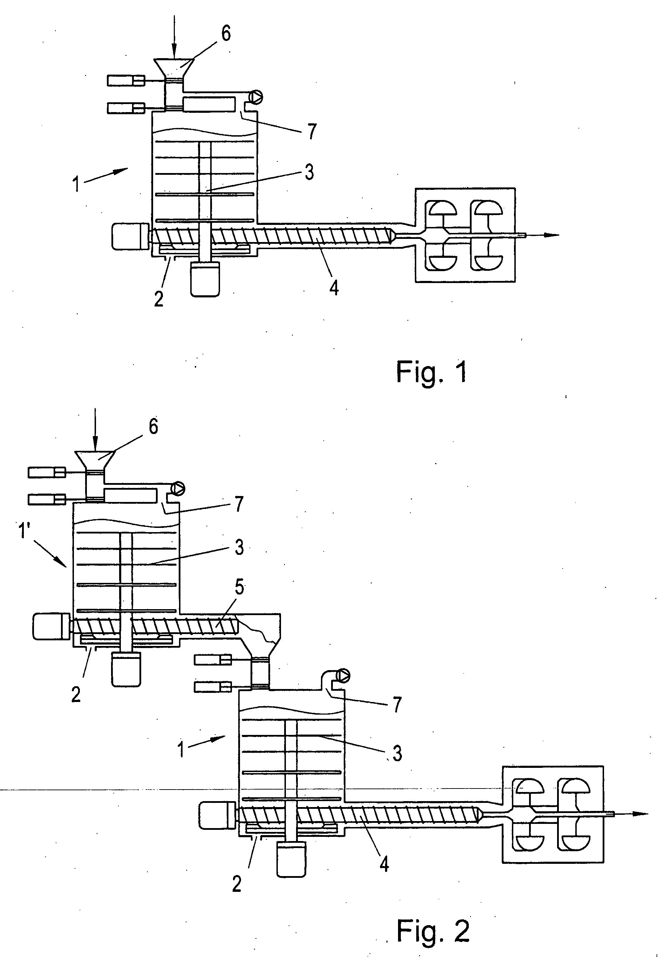

Fig. 1 zeigt eine einstufige Vorrichtung, die konstruktiv an eine Vacurema® Basic-Anlage angelehnt ist, mit dem Unterschied, dass eine Zugabeöffnung 2 für das Spülmedium ausgebildet ist. Die Vorrichtung besteht aus einem mit einer Vakuumpumpe evakuierbaren Aufnahmebehälter bzw. Vakuumreaktor bzw. Schneidverdichter 1, der im untersten Bereich an einen Einschneckenextruder 4 gekoppelt ist. Die zu recycelnden verunreinigten Flakes gelangen über eine Vakuumschleuse 6 von oben in den Aufnahmebehälter 1, werden dort durch auf einer vertikalen Achse drehbar angetriebenen Misch- und Rührwerkzeuge 3 erwärmt, erweicht, aber nicht geschmolzen, ständig bewegt, gemischt und zerkleinert. Gleichzeitig wird ein Spülgas von unten über eine am Boden befindliche Zugabeöffnung 2 eingebracht, durch das Material bzw. die Mischthrombe durchgeführt und oben durch die Absaugöffnung 7 wieder ausgebracht. Im Aufnahmebehälter 1 läuft somit das erfindungsgemäße Verfahren ab, wodurch eine Dekontamination, bei gleichzeitiger Trocknung, Kristallisation und Erhöhung der intrinsischen Viskosität erfolgt. Nach entsprechender Verweilzeit wird das Material mittels force feeding in die Einzugszone des Extruders 4 unter Beibehaltung des Vakuums gestopft und dort aufgeschmolzen, danach filtriert und weiterbehandelt.

Fig. 2 zeigt eine Anlage, die sich konstruktiv an eine Vacurema® Advanced-Anlage anlehnt. Hierbei sind zwei Aufnahmebehälter 1,1' - die jeweils so wie der Behälter in Fig. 1 ausgestaltet sind - vorgesehen bzw. ist dem evakuierbaren Hauptbehandlungsbehälter 1 ein evakuierbarer Vorbehandlungsbehälter 1' vorgeschaltet, in den das zu reinigende und zu recycelnde Rohmaterial zuerst eingebracht und nach dem erfindungsgemäßen Verfahren behandelt wird. Das Material wird nach entsprechender Verweilzeit aus dem Vorbehandlungsbehälter 1' über eine nicht komprimierende Austragsschnecke 5 unter Vakuum in den Hauptbehandlungsbehälter 1 übergeleitet und erfährt dort, insbesondere bei geänderten, aber dennoch erfindungsgemäßen, Bedingungen, erneut die erfindungsgemäße Behandlung und wird dann analog zu Fig. 1 finalisiert.

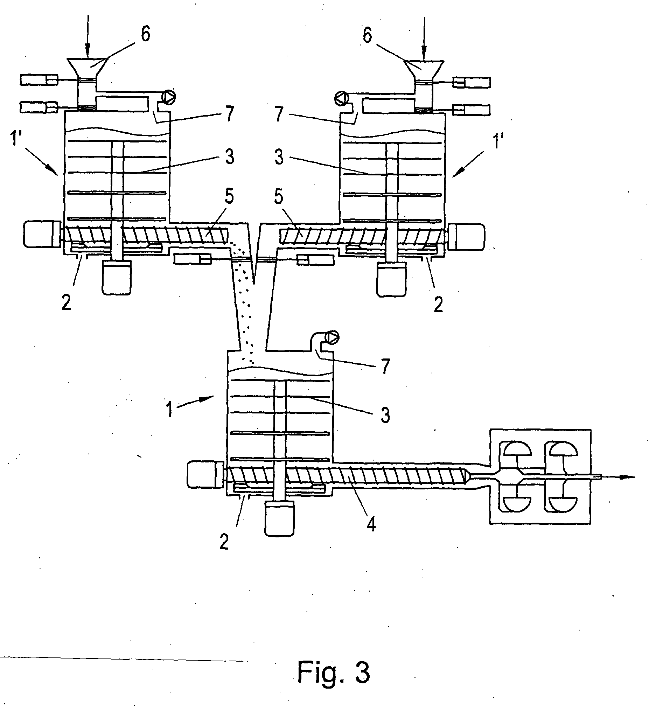

Fig. 3 zeigt eine Anlage, die sich konstruktiv an eine Vacurema® Prime-Anlage anlehnt. Hierbei sind drei Aufnahmebehälter 1,1' - die jeweils so wie der Behälter in Fig. 1 ausgestaltet sind - vorgesehen, nämlich ein evakuierbarer Hauptbehandlungsbehälter und zwei dem Hauptbehandlungsbehälter 1 vorgeschaltete Vorbehandlungsbehälter 1'. Die beiden Vorbehandlungsbehälter 1' sind parallel zueinander geschaltet bzw. werden nebeneinander bzw. jeweils abwechselnd und diskontinuierlich im Batch-Betrieb betrieben und beschicken den nachgeschalteten Hauptbehandlungsbehälter 1 abwechselnd und dadurch kontinuierlich. Alle drei Behälter 1,1' sind so ausgestaltet bzw. mit je einer Zugabeöffnung 2 für das Spülmedium ausgestattet, dass in jedem der Behälter 1,1' das erfindungsgemäße Verfahren, gegebenenfalls mit verschiedenen Parametern, durchführbar ist.

Alternativ kann vorgesehen sein, dass in den Vorbehandlungsbehältem 1' gemäß Fig. 2 und 3 kein Spülgas eingeleitet wird bzw. einleitbar ist bzw. dass diese herkömmlich betrieben werden. Im Hauptbehandlungsbehälter 1 erfolgt jedoch in jedem Fall die Einleitung des Spülgases gemäß dem erfindungsgemäßen Verfahren.

Die nachfolgenden Verfahrensbeispiele wurden mit den hier beschriebenen Vorrichtungen durchgeführt.

### Beispiel 1:

### Reinigung von HD-PE Milchflaschen in einem einstufigen Prozess - Vacurema® Basic

Bei der Verarbeitung von HD-PE Flakes aus Milchflaschen, die in einer konventionellen Waschanlage vorgewaschen wurden, mit einer adaptierten einstufigen Vacurema® Basic Anlage (Fig. 1) haben sich folgende Effekte ergeben:
Hat man z.B. einen Betriebspunkt von T_{Polymer} = 115 °C, Druck p im Behälter = 10 mbar, Verweilzeit = 60 min und eine Reinigungseffizienz von etwa 92,3 % bei gewissen MarkerChemikalien wie zum Beispiel Tuluol oder Chloroform, so erhöht sich die Reinigungseffizienz auf 98,2 % wenn ein Spülmedium, nämlich 0,003 Liter Wasser pro Stunde pro kg Material und Stunde eingebracht wird (der Materialdurchsatz lag bei etwa 300 bis 350 kg PE/h), das im Behälter verdampft. Dabei verringert sich das Vakuum auf ca. 20 bis 25 mbar, ist aber immer noch ausreichend.

### Beispiel 2:

### Reinigung von HD-PE Milchflaschen in einem zweistufigem Prozess - Vacurema® Advanced

HD-PE Milchflaschen, die in einer konventionellen Waschanlage vorgewaschen wurden, werden in einem adaptierten Vacurema Advanced® System (Fig. 2) bearbeitet und von eindiffundierten Giftstoffen befreit. Die Vorrichtung besteht aus einem Vorbehandlungsbehälter 1' und einem nachgeschalteten Hauptbehandlungsbehälter 1. Beide Behälter 1,1' werden unter Vakuum betrieben und sind mit Spülgas beaufschlagbar.

Im Vorbehandlungsbehälter 1' werden die vorgereinigten und gemahlenen HD-PE Flakes im kalten, trockenem Zustand in kleinen Portionen über eine Schleuse 6 kontinuierlich zugeführt (Materialdurchsatz 1000 kg/h). Unter ständigem Rühren werden die Flakes unter Vakuum mechanisch erwärmt. Dabei wird die Temperatur unter bzw. nahe bei der Vicat-Temperatur gehalten, um ein Verkleben oder Agglomerieren der Flakes zu vermeiden. Die Flocken verhalten sich im Vorbehandlungsbehälter 1' wie ein Fluid und laufen unter ständigem Rühren durch den Behälter, wobei eine mittlere Verweilzeit bei 50 Minuten liegt und eine Temperatur im unteren Behälterbereich von ca. 90 bis 115 °C erreicht wird. Gleichzeitig wird ein Vakuum von ca. 1 bis 30 mbar aufrechterhalten. Bei optimalen Bedingungen, insbesondere minimaler Restfeuchte usw., kann das Vakuum zeitweise sogar unter 1 mbar sinken.

Ziel ist es nun in diesem Vorbehälter 1' die in die Flakes eindiffundierten Giftstoffe zumindest aus den oberflächennahen Bereichen der Flakes zu entfernen.

Zu diesem Zwecke wird im unteren Bereich des Behälters über eine Nadeldüse 2 eine Menge von etwa 0,01 bis 0,03 Liter Wasser pro Stunde pro kg Material pro Stunde bei einer Strömungsgeschwindigkeit von ca. 2 m/min eingedüst, verdampft sofort und wird im Gegenstromprinzip durch das sich bewegende Material geführt. Der Absaugungspunkt befindet sich im Deckel des Behälters. Durch die Verdampfung des Wassers im Behälter erfolgt eine starke Volumenzunahme. Das Vakuum verringert sich auf etwa 10 bis 30 mbar.

Das Material wird dann über Schleusen bzw. Fördermittel 5 in den Hauptbehandlungsbehälter 1 überführt. Dort erfolgt eine weitere Behandlung unter anderen Bedingungen.

Im Detail liegen in den beiden Behältern folgende Bedingungen vor:
Vorbehandlungsbehälter:
T_{Mat} = 101 °C
p = 29 mbar
Spülmedium: Wasser in einer Menge von 0,02 l/h pro Materialdurchsatz in kg/h Strömungsgeschwindigkeit: ca. 2 m/min

Hauptbehandlungsbehälter (Reaktor):
T _{Mat} = 123 °C
p = 3 mbar
Spülmedium: Luft in einer Menge von 0,0033 Nm³/h pro Materialdurchsatz in kg/h entsprechend bei einem Materialdurchsatz von 1000 kg PE/h einer Menge von 3,36 Nm³ Spülluft/h bzw. 1650 m³/h bei obengenannten Bedingungen.
Strömungsgeschwindigkeit: ca. 2 m/min

Die Reinigungswirkung bei bestimmten Markerchemikalien wie z.B. Tuluol, Chlorobenzen steigt durch das erfindungsgemäße Verfahren bei Tuluol von 94,6% (ohne Spülmedium) auf 99,8% bzw. bei Chlorbenzen von 93,7% auf 99,8% an.

### Beispiel 3:

### Vergleich Luft-Wasser

Hier wurde in Beispiel 2 die Luft im Hauptbehandlungsbehälter 1 durch das Spülmedium Wasser ersetzt, wodurch sich die Bedingungen im Hauptbehandlungsbehälter 1 wie folgt änderten:
Hauptbehandlungsbehälter (Reaktor):
T _{Mat} = 124 °C
p = 5 mbar
Spülmedium: Wasser in einer Menge von 0,0032 l/h pro Materialdurchsatz in kg/h entsprechend ca. 1,800 m³ Wasserdampf/h pro Materialdurchsatz in kg/h bei obengenannten Bedingungen
Strömungsgeschwindigkeit: ca. 2 m/min

Die Chemikalien Tuluol und Chlorbenzene konnten dann nicht mehr im Material festgestellt werden. Es wurde die Detektionsgrenze unterschritten.

### Beispiel 4:

### Reinigung von Polypropylen-Flaschen

Die PP-Flaschen wurden analog zu Beispiel 2 unter folgenden Bedingungen behandelt:
Vorbehandlungsbehälter:
T _{Mat} = 122 °C
p = 35 mbar
Spülmedium: Wasser in einer Menge von 0,028 l/h pro Materialdurchsatz in kg/h entsprechend ca. 2,640 m³ Wasserdampf/h pro Materialdurchsatz in kg/h bei obengenannten Bedingungen
Strömungsgeschwindigkeit: ca. 2 m/min

Hauptbehandlungsbehälter (Reaktor):
T _{Mat} = 135 °C
p = 3 mbar
Spülmedium: Wasser in einer Menge von 0,0012 l/h pro Materialdurchsatz in kg/h entsprechend ca. 1,900 m³ Wasserdampf/h pro Materialdurchsatz in kg/h bei obengenannten Bedingungen (= 1900 m³ Wasserdampf/h pro 1000 kg PP/h)
Strömungsgeschwindigkeit: ca. 2 m/min

Analysiert wurde der Limonengehalt vor und nach dem Reinigungsschritt. Die Ausgangswerte in den ungereinigten PP-Flakes lagen im Bereich von ca. 32544 bis 46800 detector counts eines Headspace-Detektionssystems. Ohne Einströmung von Spülmedien ergab sich eine Detektion von ca. 5200 bis 8900 counts. Bei der erfindungsgemäßen Verwendung Spülmedien gingen die Werte im behandelten Material auf 1250 bis 1500 counts zurück.

### Beispiel 5:

### Reinigung von HD-PE Milchflaschen

Das Verfahren wurde gemäß Beispiel 2 geführt, allerdings mit einer Verweilzeit von 60 Minuten sowohl im Vorbehandlungs- als auch im Hauptbehandlungsbehälter. Eingesetzt wurden mit Limonen verunreinigte HD-PE Flakes. In einem Langzeitversuch wurde laufend 3000 Samples gezogen, um den Fortschritt der Dekontamination zu überwachen.

Zunächst (bis zum Sample 200) wurden die Flakes ohne Spülmedium nur unter Vakuum behandelt, wobei der durchschnittliche Limonengehalt auf etwa 1,2 ppm zurückging und sich dort einpendelte.

Dann wurden, bei ansonsten unveränderten Parametern, Spülmedien zugegeben und zwar durch eine kombinierte Anwendung von Wasser im Vorbehandlungsbehälter 1' und Luft im Hauptbehandlungsbehälter 2. Ab Sample 200 wurden die Spülmedien in beide Behälter eingeströmt und zwar bei folgenden Bedingungen:
Vorbehandlungsbehälter:
T _{Mat} = 104 °C
p = 22 mbar
Spülmedium: Wasser in einer Menge von 0,045 l/h pro Materialdurchsatz in kg/h entsprechend bei einem Materialdurchsatz von ca. 1000 kg PE/h einer Spülgasmenge (Wasserdampf) von ca. 43 m³/min bei obengenannten Bedingungen
Strömungsgeschwindigkeit: ca. 2 m/min

Hauptbehandlungsbehälter (Reaktor):
T _{Mat} = 121 °C
p = 5 mbar
Spülmedium: Luft in einer Menge von 2,3 m³/h pro Materialdurchsatz in kg/h bei obengenannten Bedingungen entsprechend bei einem Durchsatz von 1000 kg PE/h einer Menge von 2300 m³ Spülluft/h bei obengenannten Bedingungen (ca. 7,86 Nm³/h)

Strömungsgeschwindigkeit: ca. 2 m/min

Der durchschnittliche Limonengehalt ging dadurch auf etwa 0,25 ppm zurück und pendelte sich dort ein. Der Versuchsverlauf ist aus nachfolgendem Graph zu entnehmen.

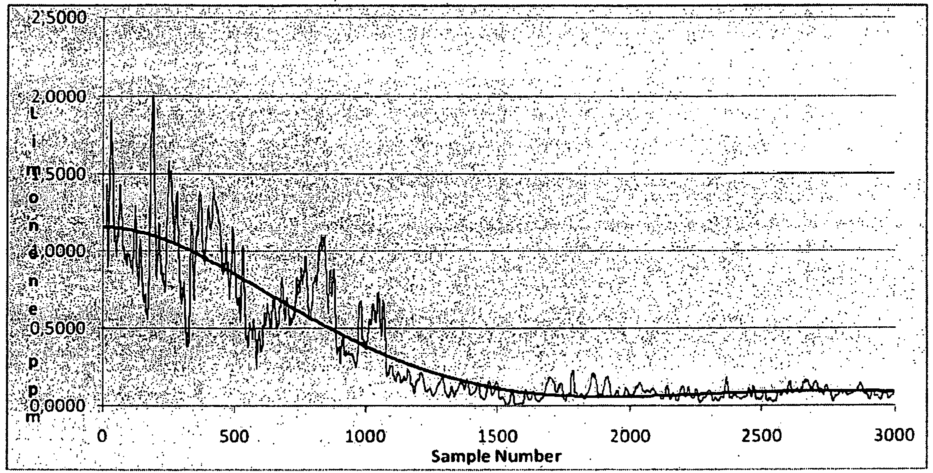

## Patentansprüche

1. Verfahren zur Aufbereitung und Entgiftung eines, insbesondere thermoplastischen, Materials bzw. zur Entfernung von Störstoffen bzw. Verunreinigungen aus diesem Material, wobei das Material in zumindest einem Aufnahmebehälter (1) unter Vakuum erwärmt, gemischt und gegebenenfalls zerkleinert wird, und wobei ein Spülmedium unterhalb des Materialniveaus in den Aufnahmebehälter (1) eingeleitet, durch zumindest einen Teilbereich des Materials hindurchgeführt und das mit Störstoffen angereicherte bzw. gesättigte Spülmedium wieder aus dem Aufnahmebehälter (1) ausgebracht wird, **dadurch gekennzeichnet, dass** die in den Aufnahmebehälter (1) eingebrachte Menge des Spülmediums bei einem flüssigen Spülmedium weniger als 0,1 Liter pro Stunde pro Kilogramm Material bzw. Materialdurchsatz pro Stunde ist, wobei gleichzeitig das Vakuum im Aufnahmebehälter (1) permanent unter 100 mbar gehalten wird.

2. *Verfahren zur Aufbereitung und Entgiftung eines, insbesondere thermoplastischen, Materials bzw. zur Entfernung von Störstoffen bzw. Verunreinigungen aus diesem Material, wobei das Material in zumindest einem Aufnahmebehälter (1) unter Vakuum erwärmt, gemischt und gegebenenfalls zerkleinert wird, und wobei ein Spülmedium unterhalb des Materialniveaus in den Aufnahmebehälter (1) eingeleitet, durch zumindest einen Teilbereich des Materials hindurchgeführt und das mit Störstoffen angereicherte bzw. gesättigte Spülmedium wieder aus dem Aufnahmebehälter (1) ausgebracht wird, **dadurch gekennzeichnet dass** die in den Aufnahmebehälter (1) eingebrachte Menge des Spülmediums bei einem gasförmigen Spülmedium weniger als* 5 *Nm³, insbesondere weniger als 0,1 Nm³, (Normkubikmeter Vₙ gemäß DIN 1343) pro Stunde pro Kilogramm Material bzw. Materialdurchsatz pro Stunde ist,*
*wobei gleichzeitig das Vakuum im Aufnahmebehälter (1) permanent unter 100 mbar gehalten wird,*
*wobei das gasförmige Spülmedium mit einer Geschwindigkeit von zumindest 1 m*/*min in den Aufnahmebehälter (1) eingebracht wird bzw. eintritt bzw. auf das Material auftrifft.*

3. Verfahren nach Anspruch 1 oder 2, **dadurch gekennzeichnet, dass** das Vakuum permanent unter 50 mbar, insbesondere zwischen 10 und 20 mbar, vorzugsweise unter 2 mbar, gehalten wird.

4. Verfahren nach *einem der Ansprüche 1 oder* 3, **dadurch gekennzeichnet, dass** als Spülmedium ein gasförmiger Stoff, insbesondere Luft, Kohlendioxid, Wasserdampf, ein inertes Gas, wie z.B. Stickstoff, etc., eingesetzt wird.

5. Verfahren nach *einem der Ansprüche 2 oder* 3, **dadurch gekennzeichnet, dass** als Spülmedium eine Flüssigkeit eingesetzt wird, die unmittelbar nach dem Eintritt in den Aufnahmebehälter (1) verdampft, insbesondere Wasser.

6. Verfahren nach einem der Ansprüche 1 bis 5, **dadurch gekennzeichnet, dass** das Spülmedium polar oder apolar ist.

7. Verfahren nach einem der Ansprüche 1 bis 6, **dadurch gekennzeichnet, dass** das Spülmedium vor dem Eintritt in den Aufnahmebehälter (1), insbesondere auf die Temperatur im Aufnahmebehälter (1), erwärmt und/oder getrocknet wird.

8. Verfahren nach einem der Ansprüche 1 bis 7, **dadurch gekennzeichnet, dass** das Spülmedium mit einer Geschwindigkeit von zumindest 1 m/min in den Aufnahmebehälter (1) eingebracht wird bzw. eintritt bzw, auf das Material auftrifft

9. Verfahren nach einem der Ansprüche 1 bis 8, **dadurch gekennzeichnet, dass** die in den Aufnahmebehälter (1) eintretende Menge des Spülmediums bei einem gasförmigen Spülmedium weniger als 0,050 Nm³, insbesondere im Bereich von 0,001 bis 0,047 Nm³ (Normkubikmeter Vₙ), vorzugsweise von 0,001 bis 0,030 Nm³, pro Stunde pro Kilogramm Material bzw. Materialdurchsatz pro Stunde und bei einem flüssigen Spülmedium vor der Verdampfung im Bereich von 0,0001 bis 0,08 Liter, vorzugsweise zwischen 0,003 bis 0,05 Liter, pro Stunde pro Kilogramm Material bzw. Materialdurchsatz pro Stunde, liegt bzw. ist.

10. Verfahren nach einem der Ansprüche 1 bis 9, **dadurch gekennzeichnet, dass** der Durchsatz, bzw. die Zugabe und die Ausbringung, des Materials und des Spülmediums in bzw. aus dem Aufnahmebehälter (1) jeweils kontinuierlich erfolgen.

11. Verfahren nach einem der Ansprüche 1 bis 10, **dadurch gekennzeichnet, dass** das Spülmedium durch die Bodenfläche des, insbesondere zylindrischen, Aufnahmebehälters (1) eingebracht wird.

12. Verfahren nach einem der Ansprüche 1 bis 11, **dadurch gekennzeichnet, dass** das Spülmedium über zumindest eine, gegebenenfalls eine einzige, Düse, beispielsweise eine Nadeldüse, vorzugsweise mit einem Durchmesser von 1 bis 10 mm, insbesondere mit einer offenen Fläche von ≤ 70 mm², eingebracht wird.

13. Verfahren nach einem der Ansprüche 1 bis 12, **dadurch gekennzeichnet, dass** bei der Aufbereitung eines, insbesondere thermoplastischen, Polymermaterials, die Behandlung bei einer Temperatur oberhalb der Glasübergangstemperatur und unterhalb des Schmelzbereiches erfolgt, vorzugsweise bei einer Temperatur bei der das Material in einem erweichten Zustand vorliegt, vorzugsweise im Bereich des VICAT-Erweichungspunktes (gemäß DIN 306, A, 10N, 50 K/h).

14. Verfahren nach einem der Ansprüche 1 bis 13, **dadurch gekennzeichnet, dass** dem Aufnahmebehälter (1) zumindest ein weiterer Aufnahmebehälter (1') vor- und/oder nachgeschaltet wird und das Material alle Aufnahmebehälter (1, 1',...) nacheinander durchläuft, wobei das Verfahren gemäß einem der vorangehenden Ansprüche in jedem der Aufnahmebehälter (1, 1',...) durchgeführt wird; insbesondere mit jeweils voneinander unterschiedlichen Spülmedien und mit unterschiedlichen Mengen an Spülmedien.

15. Verfahren nach Anspruch 14, **dadurch gekennzeichnet, dass** ein einziger Vorbehandlungsbehälter oder zwei parallel geschaltete Vorbehandlungsbahälter und ein daran anschließender Hauptbehandlungsbehälter vorgesehen ist, wobei das Verfahren gemäß einem der vorangehenden Ansprüche im Hauptbehandlungsbehälter und vorzugsweise auch in jedem Vorbehandlungsbehälter, durchgeführt wird, wobei insbesondere die Temperatur im Hauptbehandlungsbehälter größer ist als im Vorbehandlungsbehälter und/oder der Druck im Hauptbehandlungsbehälter geringer ist als im Vorbehandlungsbehälter.

16. Vorrichtung zur Durchführung des Verfahrens nach einem der vorangehenden Ansprüche, mit zumindest einem, insbesondere im wesentlichen trichterförmigen oder zylindrischen, insbesondere eine Bodenfläche (3) und eine Seitenwand (2) aufweisenden, über eine Vakuumpumpe evakulerbaren, Aufnahmebehälter bzw. Schneidverdichter (1), in dem zumindest ein, insbesondere um eine vertikale Achse (8) drehbares, Mischwerkzeug (12.21) angeordnet ist, das das im Inneren des Aufnahmebehälters (1) vorgelegte, aufzubereitende, vorzugsweise stückige bzw. teilchenförmige, Material, insbesondere ein Kunststoffmaterial in Form von nicht geschmolzenen Polymerteilchen, bewegt bzw. in Rotation versetzt, mischt, erwärmt bzw. gegebenenfalls zerkleinert bzw. auf dieses Material einwirkt, wobei im Aufnahmebehälter (1) unterhalb des Niveaus des im Betrieb Im Aufnahmebehälter (1) befindlichen Materials bzw. unterhalb des Materiallevels einer sich im Betrieb ausbildenden Mischthrombe zumindest ein *Spülmediumzufuhrmittel*, vorzugsweise in Form einer Düse, für den Eintritt eines Spülmediums ins Innere des Aufnahmebehälters (1) ausgebildet bzw. angeschlossen ist, **dadurch gekennzeichnet, dass** das *Spülmediumzufuhrmittel* so ausgestaltet ist, dass das Spülmedium mit einer Geschwindigkeit von zumindest 1 m/min in den Aufnahmebehälter (1) einführbar ist und dass der Aufnahmebehälter (1) und die Vakuumpumpe so ausgebildet bzw. konstruktiv so ausgestaltet sind; dass im Aufnahmebehälter (1) ein Vakuum permanent unter 100 mbar aufrechterhaltbar ist.

## Claims

1. A method of processing and detoxifying a material, in particular a thermoplastic material, and for removing interfering substances and/or contaminants from said material, said material being heatedunder vacuum, mixed and optionally milled in at least one receiving container (1) and a rinsing medium below material level being introduced into the receiving container (1), passed through at least part of the material and the rinsing medium enriched and/or saturated in interfering substances being brought out of the receiving container (1) again, **characterized in that** the amount of rinsing medium introduced into the receiving container (1) is less than 0.1 liter per hour per kilogram of material, or material throughput per hour, with a liquid rinsing medium, while at the same time the vacuum inside the receiving container (1) is kept permanently below 100 mbar.

2. A method of processing and detoxifying a material, in particular a thermoplastic material, and for removing interfering substances and/or contaminants from said material, said material being heatedunder vacuum, mixed and optionally milled in at least one receiving container (1) and a rinsing medium below material level being introduced into the receiving container (1), passed through at least part of the material and the rinsing medium enriched and/or saturated in interfering substances being brought out of the receiving container (1) again, **characterized in that** the amount of rinsing medium introduced into the receiving container (1) is less than 5 Nm³, in particular less than 0.1 Nm³ (standard cubic meters Vₙ according to DIN 1343), per hour per kilogram of material, or material throughput per hour, with a gaseous rinsing medium, while at the same time the vacuum inside the receiving container (1) is kept permanently below 100 mbar,
the gaseous rinsing medium being introduced into, and/or enters, the receiving container (1), and/or impinges on the material, at a rate of at least 1 m/min.

3. The method of Claim 1 or Claim 2, **characterized in that** the vacuum is permanently kept below 50 mbar, in particular between 10 and 20 mbar, preferably below 2 mbar.

4. The method of any one of Claims 1 and 3, **characterized in that** a gaseous material, in particular air, carbon dioxide, water vapor, an inert gas, such as nitrogen, etc., is used as the rinsing medium.

5. The method of any one of Claims 2 and 3, **characterized in that** a liquid that evaporates immediately after entering the receiving container (1), in particular water, is used as the rinsing medium.

6. The method of any one of Claims 1 to 5, **characterized in that** the rinsing medium is polar or apolar.

7. The method of any one of Claims 1 to 6, **characterized in that** the rinsing medium is heated, in particular to the temperature in the receiving container (1), and/or dried before entering the receiving container (1).

8. The method of any one of Claims 1 to 7, **characterized in that** the rinsing medium is introduced into, and/or enters, the receiving container (1), and/or impinges on the material, at a rate of at least 1 m/min.

9. The method of any one of Claims 1 to 8, **characterized in that** the amount of rinsing medium introduced into the receiving container (1) is less than 0.050 Nm³, in particular in the range of 0.001 to 0.047 Nm³ (standard cubic meters Vₙ according to DIN 1343), preferably 0.001 to 0.030 Nm³, per hour per kilogram of material, or material throughput per hour, with a gaseous rinsing medium, and is in the range of 0.0001 to 0.08 liters, preferably between 0.003 and 0.05 liters, per kilogram of material, or material throughput per hour, liquid rinsing medium prior to evaporation.

10. The method of any one of Claims 1 to 9, **characterized in that** the throughput, or the input and output, of the material and the rinsing medium into or out of the receiving container (1) are each performed continuously.

11. The method of any one of Claims 1 to 10, **characterized in that** the rinsing medium is introduced via the bottom surface of the, in particular cylindrical, receiving container (1).

12. The method of any one of Claims 1 to 11, **characterized in that** the rinsing medium is introduced via at least one, optionally a single, jet, for example, a needle jet, preferably having a diameter of 1 to 10 mm and in particular having an open surface of ≤ 70 mm².

13. The method of any one of Claims 1 to 12, **characterized in that** in processing a polymer material, in particular a thermoplastic polymer material, treatment is performed at temperature above glass transition temperature and below the melting range, preferably at a temperature at which the material is present in a softened state, preferably in the range of the VICAT softening point (according to DIN 306, A, 10 N, 50 K/h).

14. The method of any one of Claims 1 to 13, **characterized in that** the receiving container (1) is followed and/or preceded by at least one additional receiving container (1') and **in that** the material passes all receiving containers (1, 1', ...) consecutively, wherein the method of any one of the preceding claims is conducted in each of the receiving containers (1, 1'), in particular with mutually different rinsing media and different amounts of rinsing media.

15. The method of Claim 14, **characterized in that** a single pre-treatment container or two pre-treatment containers in parallel run and one main treatment container connected thereto are disposed, wherein the method of any one of the preceding claims is conducted in the main treatment container and preferably also in each of the pre-treatment containers, wherein in particular the temperature in the main treatment container is higher than that in the pre-treatment container and/or the pressure in the main treatment container is lower than that in the pre-treatment container.

16. A device for conducting the method of any one of the preceding claims with at least one, in particular essentially funnel-shaped or cylindrical, receiving container and/or cutting compressor (1), in particular one that has a bottom surface (3) and a side wall (2), can be evacuated via a vacuum pump and has at least one mixing tool (12, 21) arranged therein, in particular one rotatable around a vertical axis (8) that moves or rotates, mixes, heats, optionally mills or acts upon the, in particular lumpy or particulatematerial to be processed that is provided inside the receiving container (1), in particular a plastic material in the form of non-melted polymer particles, wherein at least one rinsing-medium delivering means, in particular in the form of a jet, is provided or connected within the receiving container (1) below the level of the material present in the receiving container (1) in use, or below the material level of a mixing thrombus generating during operation, for entry of a rinsing medium into the inside of the receiving container (1), **characterized in that** the rinsing-medium delivery means is designed in such a manner that the rinsing medium can be introduced into the receiving container (1) at a rate of at least 1 m/min and that the receiving container (1) and the vacuum pump are designed and/or constructed in such a manner that a vacuum can be maintained below 100 mbar permanently inside the receiving container (1).

## Revendications

1. Procédé de traitement et de détoxication d'un matériau notamment thermoplastique ou d'élimination d'impuretés de ce matériau, ledit matériau étant réchauffé, mélangé et éventuellement réduit sous vide dans au moins un récipient (1) d'accueil, et un moyen de rinçage étant inséré au-dessous du niveau dudit matériau dans le dit récipient (1) d'accueil, conduit à travers au moinsunepartieduditmatériau, et ledit moyen de rinçage, enrichi ou saturé d'impuretés, étantévacué du récipient (1) d'accueil, **caractérisé en ce que** la quantité dudit moyen de rinçage inséré dans ledit récipient (1) d'accueil dans le cas d'un moyen de rinçage liquide est de moins de 0,1 litres par heure par kilogramme de matériauou de flux de matériau par heure, ledit vide dans le récipient (1) d'accueil étant toujours maintenu au-dessous de 100 mbar.

2. Procédé de traitement et de détoxication d'un matériau notamment thermoplastique ou d'élimination d'impuretés de ce matériau, ledit matériau étant réchauffé, mélangé et éventuellement réduit sous vide dans au moins un récipient (1) d'accueil, et un moyen de rinçage étant inséré au-dessous du niveau dudit matériau dans ledit récipient (1) d'accueil, conduit à travers au moins une partie dudit matériau, et ledit moyen de rinçage, enrichi ou saturé d'impuretés, étant évacué du récipient (1) d'accueil, **caractérisé en ce que** la quantité dudit moyen de rinçage inséré dans le récipient (1) d'accueildans le cas d'un moyen de rinçage gazeux est de moins de 0,5 Nm³, notammentmoins de 0,1 Nm³ (mètre au cube standard Vₙ selon la DIN 1343) par heure par kilogramme de matériau ou de flux de matériau par heure, ledit vide dans ledit récipient (1) d'accueil étant toujours maintenu au-dessous de 100 mbar,
ledit moyen de rinçage gazeux étant inséré dans le récipient (1) d'accueil ou rencontre le matériau à une vitesse d'au moins 1m/min.

3. Procédé selon la revendication 1 ou 2, caractérisé en ceque le vide est toujours maintenu sous 50 mbar, notamment entre 10 et 20 mbar, de préférence au-dessous de 2 mbar.

4. Procédé selon la revendication 1 ou 3, **caractérisé en ce que** une matière gazeuse, notamment de l'air, du dioxyde de carbone, de la vapeurd'eau, un gazinerte, comme par exemple de l'azote etc., est utilisée comme moyen de rinçage.

5. Procédéselonune des revendications 2 ou 3, **caractérisé en ce qu'**un liquide se vaporisantimmédiatement après son entrée dans le récipient (1) d'accueil, notamment de l'eau, est utilisé comme moyen de rinçage.

6. Procédéselonune des revendications 1 à 5, caractérisé en ceque le moyen de rinçage est polaire ou apolaire.

7. Procédé selon une des revendications 1 à 6, caractérisé en ceque le moyen de rinçage est réchauffé et/ou séché, notamment à la température dans le récipient (1) d'accueil, avant d'entrer dans le récipient (1) d'accueil.

8. Procédé selon une des revendications 1 à 7, caractérisé en ceque le moyen de rinçage est inséré ou entre dans le récipient (1) d'accueil ou rencontre le matériau à une vitesse d'au moins 1 m/min.

9. Procédé selon une des revendications 1 à 8, caractérisé en ceque la quantité dudit moyen de rinçage entrant dans ledit récipient (1) d'accueil dans le cas d'un moyen de rinçage gazeux est inférieure à 0,050 Nm³, notamment de entre 0,001 et 0,047 Nm³ (mètre au cube standard Vₙ), par heureparkilogramme de matériau ou de flux de matériau par heure, et dans le cas d'un moyen de rinçage liquide avant la vaporisation de entre 0,0001 et 0,08 litres, notamment de entre 0,003 et 0,05 litres, par heure par kilogramme de matériauou de flux de matériau par heure.

10. Procédé selon une des revendications 1 à 9, caractérisé en ceque le flux ou l'addition et l'évacuation du matériau et du moyen de rinçage au/du récipient (1) d'accueil sont respectivement continus.

11. Procédé selon une des revendications 1 à 10, caractérisé en ceque le moyen de rinçage est introduit à travers la surface du fond du récipient (1) d'accueil notamment cylindrique.

12. Procédé selon une des revendications 1 à 11, caractérisé en ceque le moyen de rinçage est inséré à travers au moineune, éventuellement une seule, buse, par exemple une buse à aiguille, notamment d'un diamètre de 1 à 10 mm, notamment avec une surface ouverte de ≤ 70 mm².

13. Procédé selon une des revendications 1 à 12, caractérisé en cequelors du traitement de matériaux polymériques, notamment thermoplastiques, le traitement est effectué à une température supérieure à la température de transition vitreuse et inférieure à la zone de fusion, de préférence à une température, à laquelle le matériau est présent sous forme ramolli, de préférence autour du point de ramollissement Vicat (selon la DIN 306, 10N, 50 K/h),

14. Procédé selon une des revendications 1 à 13, caractérisé en ceque au moins un autre récipient (1') d'accueil est relié en amont et/ou en avalduditrécipient (1) d'accueil et en ceque le matériau passe successivement par tous les récipients (1, 1',...), ledit procédé selon une des revendications précédentes est appliqué dans sous les récipients (1, 1',...), notamment sur des moyens de rinçage différents entre eux et sur des quantités différentes de moyens de rinçage.

15. Procédé selon une des revendications 1 à 13, caractérisé en ceque un seul récipient de prétraitement ou deux récipients de prétraitements en série et un récipient de traitement principal, relié à celui-ci, sont prévus, le procédé selon une des revendications précédentes étant effectué dans le récipient de traitement principal et de préférence aussi dans chaque récipient de prétraitement, la température dans le récipient de traitement principal étant supérieure que dans le récipient de prétraitement et/ la pression dans le récipient de traitement principal étant inférieure au récipient de prétraitement.

16. Procédé pour l'application du procédé selon une des revendications précédentes avec au moins un récipient d'accueil ou coupeur-compacteur (1), notamment essentiellement de forme d'entonnoir ou cylindrique, notamment présentant une face (3) de fond et une face (2) latérale, pouvant être évacué à travers une pompe à vide, dans lequel est disposé un outil (12, 21) de mélange, pouvant étre tourné autour un axe (8) vertical, mouvant ou mettant en rotation, réchauffant ou réduisant ou agissant sur ledit matériau à traiter présent à l'intérieur du récipient (1) d'accueil, de préférence en morceaux ou en particules, notamment un matériau plastique en particules polymères non fondues, dans le récipient (1) d'accueil étant formé ou relié au-dessous du niveau du matériau présent dans la récipient (1) d'accueil lors de l'utilisation ou au-dessous du niveau du matériau d'une trombe de mélange en utilisation au moins un moyen d'apport de moyen de rinçage, de préférence sous forme de buse, pour l'entrée d'un moyen de rinçage dans l'intérieur du récipient (1) d'accueil, caractérisé en ceque le moyend'apport de moyen de rinçage est conformé de manière à ceque le moyen de rinçage puisse être introduit dans le récipient (1) d'accueil à une vitesse d'au moins 1 m/min et en ceque la pompe à vide est conformé ou construite de manière à cequedans le récipient (1) d'accueil un vide soit toujours maintenu au-dessous de 100 mbar.
